# EUROPEAN PATENT SPECIFICATION

(11) **EP 4 609 065 B1**
(45) Date of publication and mention of the grant of the patent: **11.03.2026**
(21) Application number: 22809092.4
(22) Date of filing: 25.10.2022
(51) Int. Cl.: F02C 7/224, F02K 9/78

(54) **AIR TURBOROCKET APPARATUS WITH BOILER**
LUFTTURBOGESCHIRRVORRICHTUNG MIT KESSEL
APPAREIL DE TURBO-STATORÉACTEUR AVEC CHAUDIÈRE

(43) Date of publication of application: 03.09.2025
(73) Proprietor: Destinus SA, 1530 Payerne (CH)
(72) Inventor: ROIG TIÓ, Ferran, 1530 Payerne (CH); KOKORICH, Mikhail, 1530 Payerne (CH)
(74) Representative: E. Blum & Co. AG
(86) International application number: PCT/EP2022/079741
(87) International publication number: WO 2024/088516

(56) References cited:
- GB-A- 2 240 813
- US-A- 3 740 949
- US-A- 5 161 365
- US-A1- 2019 293 024
- US-B2- 7 284 363

## Description

### BACKGROUND

The invention relates in general to the field of air turborocket apparatuses, aircrafts including such apparatuses, and method of operating the same. In particular, it is directed to an air turborocket apparatus including a boiler used to preheat fuel that is subsequently expanded through a turbine, so as to more efficiently drive a compressor and a pump of the apparatus.

An air turborocket (also called turboramjets or turboramjet rocket) can be regarded as a combined-cycle jet engine, i.e., an expander cycle engine that uses heat from the combustion to energize the fuel so that it can be expanded in a turbine to drive a fuel pump and/or a compressor.

The heat transfer rate required for useful levels of thrust is significant. The available hot area, according to which heat can be transferred from the hot stream to the initially cold fuel, is a limiting factor of the engine efficiency. If there is not enough area to transfer the amount of heat required for a particular engine design, the expander cycle cannot be optimally used.

Therefore, the invention aims at providing an efficient solution to transfer heat to the cold fuel.

US3740949A discloses a reaction propulsion system including means providing a combustion chamber having at its rearward end an impulse expansion outlet nozzle, means providing a ram air intake, means directing air from the ram air intake to the forward end of the combustion chamber, a fuel storage chamber, indirect fuel heating heat exchange means in heat exchange contact with the ram air in the air directing means, means for directing fuel through the indirect heat exchange means, an air compressor providing a portion of the air directing means between the indirect heat exchange means and the forward end of the combustion chamber, a direct expansion turbine for driving the air compressor, further fuel heating heat exchange means associated with the air compressor, means for directing fuel through the further indirect heat exchange means, means for directing at least a portion of the air heated fuel through the direct expansion turbine and means for directing at least the fuel exhausting from the direct expansion turbine into the combustion chamber.

US7284363B2 discloses a power generation system for supplying electrical power in an airborne vehicle operating in-flight for a period of at least two continuous days. The system comprises a turbine engine, a burner, and a heat exchanger. The turbine engine is adapted to operate in a closed cycle at an altitude of at least 50,000 feet with a working fluid for alternately receiving heat and releasing heat, wherein the working fluid within the closed cycle does not communicate with ambient air and has constant mass. The burner provides combustion of a fuel in the presence of ambient air at said altitude, the ambient air being unheated and uncompressed by the system. The burner produces heated combustion by-products, wherein the fuel is injected into the burner at a pressure that is higher than ambient air pressure so as to entrain ambient air in the fuel and thereby improve combustion of the fuel at said altitude. The heat exchanger transfers the heat contained in the heated combustion by-products to the working fluid, thereby converting the heated combustion by-products into cooled combustion by-products that are vented to the ambient air.

US5161365A discloses a multiple power generating system for aircraft operating at high mach numbers having a fuel tank filled with liquid, endothermic fuel, said multiple power generating system being able to provide thrust, mechanical power to drive said aircraft's accessories, cooling flow and fuel flow, comprising in combination: a propulsion engine comprising in a flow series arrangement, a first section in which air is compressed, a second section in which said compressed air and fuel air mixed and ignited forming a pressurized hot gas, said pressurized gas being at a pressure slightly below the pressure of said compressed air, and a third section in which said hot gas is expanded; and a secondary power system having a heat exchanger means with a first flow path therethrough, which is in fluid communication with said first and third sections of said engine, and a second flow path therethrough which is in fluid communication with said fuel tank and said second section of said engine so that fuel flows from said tank to said second section, said first and second flow paths being in a heat transfer reaction with each other, whereby, said first flow path delivers substantially cooled to said third section of said engine and said second flow path delivers gaseous fuel to said second section of said engine, said second flow path having a motor means operably disposed therein for extracting pressure energy from said gaseous fuel and converting it to mechanical power for driving said aircraft's accessories which includes a pump means for pumping said liquid fuel through said second flow path.

US2019/293024A1 discloses a hydrogen-fueled supersonic turboramjet engine system comprising: an inlet; a combustor; a fuel storage; a high-pressure turbine, and a low-pressure turbine; a compressor; a first plurality of stream lines configured to circulate a fuel through a first plurality of heat exchangers, wherein the first plurality of stream lines connects the fuel storage to the combustor; and a second plurality of stream lines configured to circulate a working fluid through a second plurality of heat exchangers, including the first plurality of heat exchangers, at least some positioned in airframes and a precooler, wherein the second plurality of stream lines connects the compressor to the low-pressure and the high-pressure turbines. The use of working fluid with at least high latent heat or specific heat enables use of presently available commercialized alloys due to active cooling of the airframe and the engine through the plurality of heat exchangers using the working fluid as a heat sink. The cryogenic LH2 fuel can be used as a heat sink circulating through the plurality of heat exchangers, absorbing heat by at least latent heat of evaporation or increase in the working fluid temperature.

### SUMMARY

According to a first aspect, the present invention is embodied as an air turborocket apparatus. The apparatus includes an air intake, a compressor, a turbine, a gas generator system, a coupling system, a combustion chamber, and a nozzle. The air intake is designed to receive atmospheric air. The compressor is designed to compress atmospheric air received by the air intake, in operation. The gas generator system includes a fluid circuit, which defines a flow path to the turbine, and a driving system, which is designed to convey a fluid along the fluid circuit for the fluid to expand through the turbine and rotate it. The coupling system couples the turbine with one or each of the compressor and the driving system, with a view to transferring energy to one or each of the compressor and the driving system. The combustion chamber is designed to receive and combust a mixture of the compressed atmospheric air and the expanded fluid, while the nozzle is arranged to expel the combusted mixture and thereby create thrust, in operation. Interestingly, the apparatus further includes a boiler, which is designed to generate heat. The boiler is in thermal communication with said flow path to transfer the generated heat to the fluid conveyed along the flow path, in operation.

The present solution provides an additional area for heat exchange, i.e., an additional surface through which heat can be transferred to the fluid circuit, while requiring minimal power. The boiler leads to minimal fuel consumption increase, should it be based on fuel combustion, as in preferred embodiments. The boiler preferably uses the same liquid fuel as used in the main combustion line.

In embodiments, the coupling system couples the turbine with the compressor, whereby the rotated turbine at least contributes to rotate the compressor to accordingly compress the atmospheric air received by the air intake, in operation.

Preferably, the driving system includes a pump designed to pump liquid fuel. The pump is connected to the fluid circuit to inject the pumped liquid fuel into the fluid circuit, whereby the fluid to be conveyed along the fluid circuit is obtained from the pumped liquid fuel, in operation.

In preferred embodiments, the coupling system couples the turbine with the pump, whereby the rotated turbine at least contributes to actuate the pump, in operation. The turbine is preferably coupled to each of the pump and the compressor.

Preferably, the fluid circuit comprises two subcircuits, these including a first subcircuit and a second subcircuit. The first subcircuit connects the pump to the boiler, which can accordingly combust a fluid formed from the pumped liquid fuel, while the second subcircuit connects the pump to the turbine, thereby defining said flow path to the turbine.

In embodiments, the apparatus further includes a first heat exchanger, which thermally connects the boiler and a portion of the flow path defined by the second subcircuit, to transfer the generated heat to the fluid conveyed along the second subcircuit.

Preferably, the apparatus further includes a second heat exchanger arranged along the second subcircuit, upstream of the first heat exchanger, to transfer heat from the combustion chamber and/or the nozzle to fluid conveyed along the second subcircuit.

More preferably, the driving system further includes a third heat exchanger arranged along the second subcircuit, upstream of the second heat exchanger, to transfer heat from the atmospheric air received by the air intake to fluid conveyed along the second subcircuit.

In embodiments, the boiler is designed to combust fuel and produce a low-pressure combustion gas flow, while the gas generator is designed to produce a high-pressure flow of the fluid in the fluid circuit.

For example, the boiler can be designed to produce said low-pressure combustion gas flow inside a duct delimited by an inner wall of the boiler. The duct is typically not in fluid communication with said fluid circuit.

Preferably, a portion of the fluid circuit includes a conduit that is coiled around the duct, thereby forming a heat exchanger to transfer the generated heat to the fluid conveyed along said conduit.

The conduit may for instance be coiled inside the boiler, against said inner wall of the boiler. In variants, said portion of the conduit is coiled around the boiler, against an outer wall of the boiler.

Preferably, the apparatus further includes an air inlet configured to transfer part of the atmospheric air compressed by the compressor to the boiler, in operation.

According to another aspect, the invention is embodied as an aircraft comprising one or more air turborocket apparatuses such as described above. Preferably, the aircraft further includes one or more fuel tanks, to which the gas generator system and the boiler are connected.

According to another aspect, the invention is embodied as a method of operating an air turborocket apparatus. The method relies on an air turborocket apparatus as described above. The method basically amounts to operating the air turborocket apparatus for the air intake to receive atmospheric air and the compressor to compress atmospheric air received by the air intake. The driving system conveys a fluid along the fluid circuit for the fluid to expand through the turbine and rotate it, so as to transfer energy to one or each of the compressor and the driving system. Meanwhile, the boiler generates heat and transfers the generated heat to the fluid conveyed along said flow path. The combustion chamber receives and combusts a mixture of the compressed atmospheric air and the expanded fluid, and the nozzle expels the combusted mixture to thereby create thrust, consistently with features of the apparatus described above.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIGS. 1 and 2 respectively show a 3D view and a rear view of a high-speed aircraft equipped with an air turborocket, according to embodiments;
FIG. 3 is a schematic of an air turborocket apparatus according to embodiments, illustrating the interplay between the main combustion line and the fuel circuit, whereby fuel conveyed along the fluid circuit is heated by components of the air turborocket apparatus, which notably includes a boiler to help heat the fuel;
FIG. 4 is a 3D view of such an air turborocket, according to embodiments;
FIG. 5 schematically illustrates the propagation of fuel along a fluid circuit of the air turborocket of FIG. 4, whereby heat is transferred by a boiler to fuel conveyed in that fluid circuit, before the fuel expands through the turbine, as in embodiments; and
FIG. 6 is another diagram schematically illustrating selected components of an air turborocket according to embodiments, the function of such components, and how these components interact in operation of the air turborocket, as in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Apparatuses, aircrafts, and methods, embodying the present invention will now be described, by way of non-limiting examples.

### DETAILED DESCRIPTION OF EMBODIMENTS OF THE INVENTION

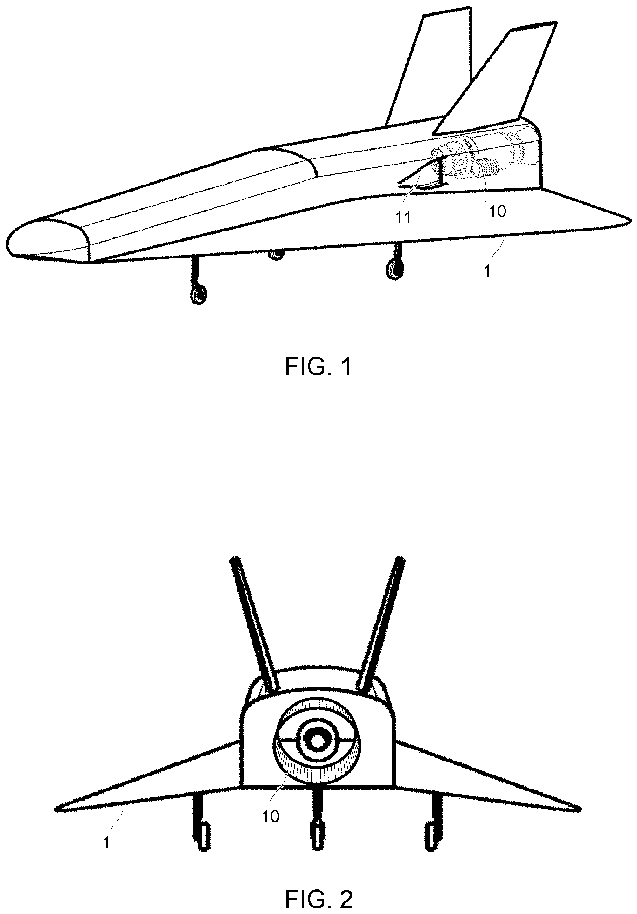

A first aspect of the invention is now described in reference to FIGS. 1 - 6, which concerns an air turborocket apparatus 10. Note, this apparatus may consist of a sole air turborocket or include an air turborocket connected to additional aircraft components, such as one or more fuel tanks, pumps, external compressors, batteries, etc., which together form an apparatus 10. The aircraft 1 itself concerns another aspect of the invention, which is described later.

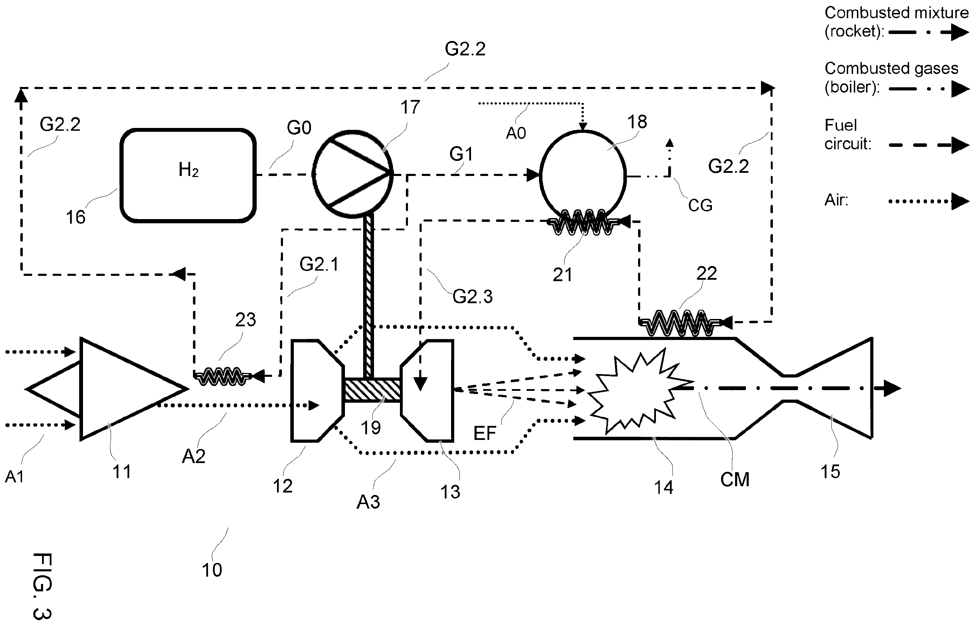

As seen in FIG. 3, the apparatus 10 notably includes an air intake 11, a compressor 12, a turbine 13, a gas generator system, a coupling system 19, a combustion chamber 14, and a nozzle 15.

The air intake 11 (also called air inlet) is designed to receive atmospheric air, the inlet flow of which is referred to as "A1" in FIG. 3. Various inlet designs are known (e.g., supersonic inlets, inlet cones, inlet ramps, etc.), which may be used in the present context. In general, the air intake is designed to ensure smooth airflow into downstream components of the engine.

The compressor 12 is designed to compress a flow A2 of atmospheric air received from the air intake 11, in operation. In FIG. 3, the flow A3 denotes compressed air, which is directed to the combustion chamber 14. Various compressor designs may be contemplated, starting with usual multi-stage compressors.

The gas generator system is meant to generate a fluid flow to actuate the turbine 13. The gas generator system includes a fluid circuit (see references G0 - G2.3 in FIG. 3) and a driving system 17, 21 - 23. The fluid circuit G0 - G2.3 notably defines a flow path G2.3 to the turbine 13. The driving system 17, 21 - 23 is generally designed to drive a high-pressure fluid and thus convey the fluid along the fluid circuit, with a view to eventually expanding the fluid EF through the turbine 13 and rotating the latter. In operation, the gas generator generates a flow of a fluid, which may be a liquid, a gas, or a supercritical fluid, notwithstanding the terminology "gas generator". The state of matter may typically vary along the fluid circuit. For example, preferred embodiments rely on liquid hydrogen (LH₂), which is initially stored in a tank 16, pumped, and conveyed along the fluid circuit, where it is subject to such pressures and temperatures that is changes to supercritical H₂ (above 13 bars and -240 °C).

The role of the coupling system 19 is to couple the turbine 13 with one or each of the compressor 12 and (one or more elements of) the driving system 17, with a view to transferring energy to the compressor and/or the driving system. The coupling system 19 may for instance form a linkage between, on the one hand, the turbine 13 and, on the other hand, the compressor 12 and/or an element of the driving system 17 such as a pump 17 or an external compressor (distinct from the compressor 12). This linkage may for example be a purely mechanical system, e.g., involving gearboxes. In that case, the turbine is rotatably coupled to the compressor 12 and/or elements of the driving system 17.

In more sophisticated variants, the turbine 13 is indirectly coupled to the compressor and/or driving system, via an electromechanical system. For example, the apparatus 10 may include a battery. In that case, power required by the compressor 12 and/or the driving system 17 is provided both by the turbine 13 and the battery, rather than the sole turbine. In all cases, however, the energy produced by rotating the turbine causes (or contributes to cause) to rotate the compressor 12 and/or actuate the driving system 17, whether by directly transferring mechanical energy or by converting this energy to electrical power. In preferred embodiments, the coupling system is designed so that the turbine 13 drives (or contributes to drive) both the compressor 12 and a pump 17 of the driving system.

The combustion chamber 14 is designed to receive and combust a mixture A3, EF of the compressed atmospheric air A3 and the expanded fluid EF, as illustrated in FIG. 3. In operation, the chamber 14 continuously burns the expanded fluid after initial ignition during the engine start. The nozzle 15 is arranged downstream of the combustion chamber, so as to expel the combusted mixture CM and thereby create thrust, in operation of the apparatus 10. That is, the combusted mixture (exhaust gas) passes through the propelling nozzle to produce a high velocity jet. Various nozzle configurations may be involved. The nozzle may notably be configured as a supersonic nozzle.

Interestingly, the apparatus 10 further includes a boiler 18. The boiler is designed to generate heat. It is arranged in thermal communication with the flow path G2.3 leading to the turbine 13. To that aim, a heat exchanger 21 may thermally connect the boiler 18 with an end portion G2.3 of the flow path leading to the turbine 13, to efficiently transfer the heat generated by the boiler 18 to the fluid conveyed along this end portion G2.3. The heated fluid is accordingly expanded through the turbine 13 to more efficiently drive the compressor 12 and/or a component (e.g., the pump 17) of the driving system 17.

That is, the proposed solution provides an additional area for heat exchange, i.e., an additional surface through which heat can be transferred to the fluid circuit, while requiring minimal power. Indeed, the heat exchange mechanism at work involves two flows at different temperatures, which are put side by side, separated by a wall, so that the hot flow transfers heat to the cold flow. The heat transfer rate is the parameter that characterizes the performance of the heat exchange. The heat transfer rate can be averaged as *Q̇ = UA*Δ*Tₘ,* where *Q̇* is the heat transfer rate, *U* is the overall heat transfer coefficient, *A* is the surface of the heat exchanger, and Δ*Tₘ* is the average temperature difference between the hot and cold flows. The aim is to maximize the heat transfer rate. This can be achieved by maximizing the overall heat transfer coefficient, the surface of the heat exchanger, or the average temperature difference. The present solution amounts to inserting a new heat source (the boiler) in the fluid circuit and providing a heat exchange surface to maximize the heat transfer rate.

In preferred embodiments, the boiler is based on fuel combustion (instead of electrical power), which leads to a negligible fuel consumption. That is, the boiler 18 can be designed as a fuel boiler, i.e., an engine component that typically includes a burner combusting liquid or gas and a combustion chamber, where combustion takes place. Various fuel boiler designs are known in the art, which can be adapted for use in the present context. The boiler combustion chamber is in thermal contact with the fluid circuit, so that heat generated by the boiler 18 can be transferred to the fluid circuit.

The boiler 18 preferably uses the same liquid fuel as used in the main combustion line, e.g., liquid H₂. That is, the combustion inside the boiler can make use of a small portion of the engine fuel, combined with an oxidizer that may be carried onboard. In preferred variants, the oxidizer is air. The boiler may rely on non-compressed air (i.e., ambient air), which may be admitted A0 through a small vent, e.g., provided in a conduit downstream the air intake of the aircraft 1. In variants, it relies on compressed air, which is advantageously bled from the engine's compressor 12. In that case, a further air inlet may be configured to transfer part of the air compressed by the compressor 12 to the boiler 18. In both cases, the boiler is provided with air; the corresponding air path is symbolically represented by the arrow A0 in FIG. 3.

As opposed to the gas generator, which typically produces a high-pressure flow of fuel in the fluid circuit, the boiler 18 is typically designed to produce a low-pressure combustion gas flow CG. That is, the fluid directed to the turbine 13 has a much higher pressure than combustion gases produced by the boiler. For this reason, the gases produced by the boiler 18 will normally be expelled independently from the main combustion line. They will accordingly not contribute to generate thrust.

The boiler 18 may notably include a duct, connected to its combustion chamber, such that low-pressure combustion gases produced by the boiler 18 may be conveyed inside and along this duct. This duct is a passageway for gases resulting from the combustion taking place inside the boiler 18. Again, such gases are distinct from fluids conveyed in the fluid circuit and gases involved in the main combustion line, even if they can be produced from the same liquid fuel (e.g., LH₂). Consistently, the boiler's duct is not in fluid communication with the fluid circuit G0 - G2.3, and the boiler 18 expels its combustion gases flow independently from the combusted mixture CM expelled by the nozzle 15.

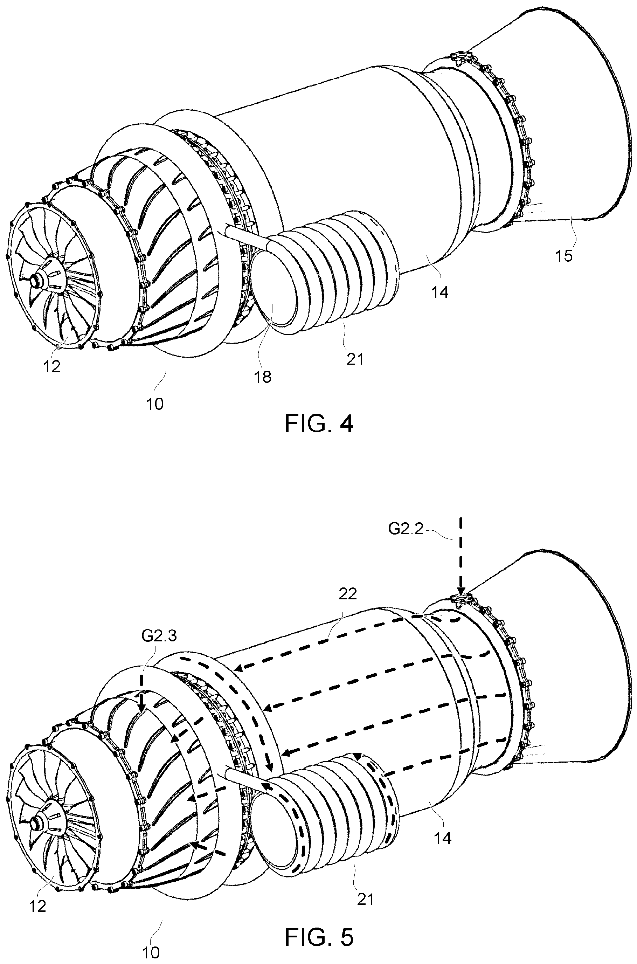

In embodiments, the heat exchanger 21 is formed by a conduit in thermal (e.g., direct) contact with the boiler 18. This conduit may for instance be a metal tube, e.g., a tube having diameter between 0.5 and 5 mm. The fluid circuit may use similar metal tubes. The fluid circuit may further include additional heat exchangers 22, 23, as discussed later. In detail, a portion G2.3 of the fluid circuit may include a conduit (e.g., a 2 mm diameter tube) that is coiled around the boiler's duct, as assumed in FIGS. 4 and 5. The coiled conduit forms a first heat exchanger 21, which efficiently transfers the heat generated by the boiler 18 to the fluid conveyed along the conduit. In the example of FIGS. 4 and 5, the conduit is coiled around an external wall of the boiler's duct. In variants, this conduit is coiled inside the duct, e.g., against an inner wall delimiting the duct. The conduit may also be coiled around the boiler 18, against an outer wall of, e.g., the combustion chamber of the boiler. In further variants, this conduit may also be arranged in the thickness of a wall delimiting the duct or the combustion chamber. Various other heat exchanger designs can be contemplated.

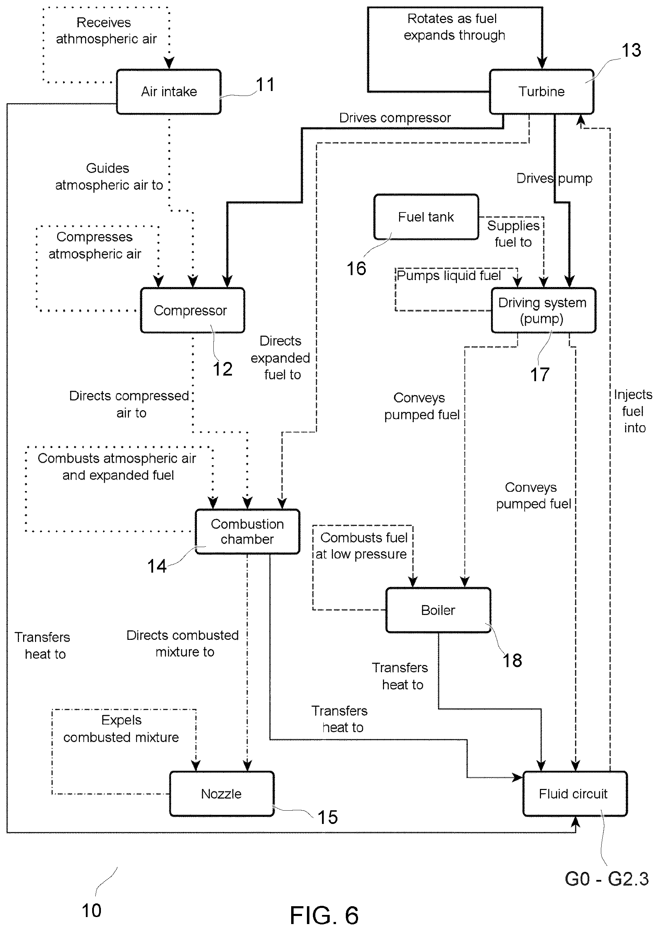

The following describes the coupling system 19. As illustrated in FIGS. 3 and 6, the coupling system 19 is generally configured to couple the turbine 13 with the compressor 12. As explained earlier, this allows the rotated turbine to (at least) contribute to drive the compressor 12 and/or the driving system 17. In preferred embodiments, the turbine is coupled to the compressor 12, to rotate it and accordingly compress atmospheric air A2 received from the air intake 11. I.e., the turbine 13 and the compressor 12 form a turbine-compressor assembly. As said, the rotation of the compressor may be entirely driven by the rotating turbine, via gearboxes. In that case, the mechanical energy of the rotated turbine 13 is transferred to rotate the compressor. In variants, the rotated turbine may only be indirectly coupled to the compressor. For example, the rotation of the turbine may first be converted into electrical power, which is then used to rotate the compressor. Part of the electrical power generated by the turbine 13 may be used to power the boiler, should it be an electric boiler. Additional electric power (e.g., from an external battery) may further be applied to actuate the compressor, if necessary. In that case, the turbine rotation only contributes to rotate the compressor, which is secondarily powered by another source.

The driving system 17, 21 - 23 typically includes a pump 17 which is designed to pump liquid fuel (e.g., H₂), as illustrated in FIG. 3. The pump is connected to the fluid circuit G0 - G2.3 to inject pumped liquid fuel into the fluid circuit. I.e., the fluid conveyed along the fluid circuit is initially obtained from pumped liquid fuel. In variants, or in addition to the pump 17, the driving system may also involve one or more external compressors (distinct from the compressor 12), to apply pressure to the liquid fuel upon injecting it into the fluid circuit.

The components of the driving system require power too, hence the benefit of harnessing power generated from the turbine 13. Thus, in embodiments, the coupling system 19 couples the turbine 13 with one or more elements of the driving system, e.g., a pump 17. In that case, the rotated turbine 13 actuates (or contributes to actuate) the pump 17. In preferred embodiments, the turbine rotation is exploited to actuate both the compressor 12 and one or more elements of the driving system 17. A preferred scenario is one in which the coupling system 19 couples the turbine 13 with each of the pump 17 and the compressor 12. Again, the turbine may only be indirectly coupled to such elements, which may further be secondarily powered by another source (e.g., a battery), if necessary.

The following discusses embodiments of the fluid circuit structure. Referring to FIG. 3, the fluid circuit G0 - G2.3 preferably include two subcircuits, namely a first subcircuit G1 and a second subcircuit G2.1 - G2.3. The first subcircuit connects the pump 17 to the boiler 18. The role of the first subcircuit G1 is to convey a fluid obtained from the pumped liquid fuel to the boiler 18, for the boiler to subsequently combust this fuel and heat another part of the fluid circuit, i.e., the second subcircuit G2.1 - G2.3. The latter defines a flow path to the turbine 13; it is used to convey the high-pressure flow of fluid produced by the gas generator to the turbine 13, with a view to actuating the turbine as the high-pressure flow expands through it. To that aim, the second subcircuit G2.1 - G2.3 defines a flow path connecting the pump 17 to the turbine 13.

The second subcircuit notably includes an end portion G2.3, which ends up at the turbine 13. Now, the first heat exchanger 21 may be arranged so as to thermally connect the boiler 18 with the end portion G2.3 of the flow path to the turbine 13. The function of this heat exchanger 21 is to efficiently transfer the heat generated by the boiler to high-pressure fluid conveyed to the turbine. This way, the boiler 18 and the heat exchanger 21 provides additional area for heat exchange, subject to a minimal fuel consumption increase. As noted earlier, the first heat exchanger 21 may form an integral part of the second subcircuit, i.e., a portion of the second fluid subcircuit, which may for instance be formed as a conduit (e.g., a metal tube) coiled around or inside the boiler 18 (or a duct thereof).

For completeness, an additional section G0 connects the tank 16 to the pump 17. This section is not directly connected to the two subcircuits G1, G2. Note, the design shown in FIG. 3 suggests that the first subcircuit branches from the second subcircuit, whereby a small part of the pumped fuel is passed to the boiler, the rest being directed to the turbine. Another option is to independently pump fuel meant to the boiler and the turbine, which may require two pumps, possibly connected to a same tank or respective tanks.

The apparatus 10 may further include additional heat exchangers 22, 23. For example, a second heat exchanger 22 may advantageously be arranged along the second subcircuit G2.1 - G2.3, yet upstream of the first heat exchanger 21, e.g., close to the combustion chamber 14, so as to transfer heat from the combustion chamber 14 to the conveyed fluid. Further heat exchangers may be provided to harness heat generated in other locations of the apparatus 10. For example, the driving system may include a third heat exchanger 23 arranged along the second subcircuit G2.1 - G2.3, upstream of the second heat exchanger 22, to transfer heat generated by the air intake 11 to fluid conveyed along the second subcircuit. The heat exchanger 23 acts as a pre-cooler, which cools down incoming air. The supercritical phase of H₂ is typically achieved after the pre-cooler 23, in operation. In variants, several heat exchangers may actually be used instead of the single heat exchanger 23 shown in FIG. 3; such heat exchangers may for instance be configured as a two-stage pre-cooler, just behind the inlet. Another heat exchanger may also be arranged in proximity with the compressor 12.

The boiler and heat exchangers are preferably made of high-performance materials that can withhold high temperatures and transfer heat efficiently. Examples of such materials include aerospace standard stainless steel, titanium alloys, and nickel alloys. The heat exchangers can advantageously be configured as coiled conduit sections, cooling jackets, or involve microchannels. A characteristic dimension of the heat exchanger (e.g., the cooling jacket thickness or the cross-sectional diameter of the microchannels) will typically be on the order of 1/200 of the engine diameter. Still, this dimension may possibly be scaled down, the manufacturing process permitting. The ratio of a characteristic diameter of the boiler (e.g., the diameter of the boiler's duct) to the engine diameter will typically be between 1/4 and 1, although the boiler may also possibly be scaled down, depending on the boiler type and performance.

The above embodiments have been succinctly described in reference to the accompanying drawings and may accommodate a number of variants. Several combinations of the features described above may be contemplated. For example, as illustrated in the diagram of FIG. 3, the apparatus 10 relies on a single fuel tank 16 storing liquid fuel, which is pumped by the pump 17. The pumped fuel is then injected into a subsection G2.1 - G2.3 of the fluid circuit, with relatively high pressure, while a small portion of the pumped fuel is bled to the boiler 18, via another fluid circuit subsection G1. The boiler 18 combusts the fuel (at low pressure) thanks to atmospheric air bled from an air intake 11. The heat generated by the boiler 18 is transferred to an end portion G2.3 of the fluid circuit subsection G2.1 - G2.3, thanks to a heat exchanger 21, which actually forms part of the fluid circuit. That is, the heat exchanger 21 is formed as a conduit portion (a 2 mm metal tube), which is coiled around a duct of the boiler, as illustrated in FIGS. 4 and 5.

The pumped fuel is injected in an upstream portion G2.1 of the fluid circuit, leading to another heat exchanger (pre-cooler) 23, which cools down air received by the air inlet 11. After that the heated fuel (which now may be in a supercritical state) reaches a further circuit section G2.2, which conveys the fluid to a further heat exchanger 22. The latter absorbs heat from the combustion chamber 14, upstream of the heat exchanger 21. The end portion G2.3 of the fluid circuit brings the fluid to the turbine 13. The fluid accordingly expands EF through the turbine 13, causing the turbine 13 to rotate. The turbine is coupled to each of the compressor 12 and the pump 17 via a coupling system 19 involving gearboxes, to transfer energy to such elements. Air A3 compressed by the compressor 12 is conveyed to the combustion chamber 14, which further receives the expanded fluid EF. The mixture is combusted in the chamber 14 and expelled by the nozzle 15 to create thrust.

FIG. 5 schematically illustrates the flow path of the pumped fuel in the second subcircuit. Fuel is injected from the second fluid circuit portion G2.2 into the heat exchanger 22. In this example, the exchanger 22 is made of metal conduits extending inside the combustion chamber 14, against an inner wall thereof. The fuel is accordingly heated and conveyed to the boiler 18, via a fluid conduit 21 that is coiled around a duct of the boiler, thus forming a further heat exchanger 21. Thus, the fluid is further heated, prior to being injected to the turbine 13 via the end portion G2.3 of the flow path.

The functions of the main components of the apparatus 10 are summarized in the diagram of FIG. 6. Of course, the apparatus 10 may include additional components (not shown), such as bypass ducts, shafts, diffuser sections, etc., as usual in the field of air turborockets.

Referring now more specifically to FIGS. 1 and 2, another aspect of the invention concerns an aircraft 1, which is equipped with one or more air turborocket apparatuses 10 as described above in reference to FIGS. 3 - 6. The aircraft 1 may notably be a drone or a high-speed plane, such as a supersonic or hypersonic plane. As usual, the aircraft 1 includes an aircraft structure (or airframe), i.e., the internal load bearing structure, which is a structural assembly typically made from frames, stringers, spars, ribs, and panels, which are usually machined or formed from sheet metal. The airframe houses a number of components, starting with the air turborocket(s) 10 and the fuel tanks 16, to which the gas generator system and the boiler 18 are connected, e.g., via one or more pumps 17, as explained earlier.

A final aspect of the invention concerns a method of operating an air turborocket apparatus 10, or actually an aircraft 1 including such an apparatus 10, as described above. The method basically revolves around operating the air turborocket apparatus for the air intake 11 to receive atmospheric air A1, the compressor 12 to compress atmospheric air A2 received by the air intake 11, and the driving system 17, 21 - 23 to convey a fluid along the fluid circuit. As explained earlier, the aim is to expand the fluid EF through the turbine 13 and rotate the turbine, to transfer energy to one or each of the compressor 12 and the driving system. This causes the combustion chamber 14 to receive and combust a mixture of the compressed atmospheric air A3 and the expanded fluid EF, which is subsequently expelled by the nozzle 15 to create thrust. Meanwhile, the boiler 18 is operated to generate heat and transfer the generated heat to the fluid conveyed along the flow path to the turbine, with a view to improving the efficiency of the process.

While the present invention has been described with reference to a limited number of embodiments, variants and the accompanying drawings, it will be understood by those skilled in the art that various changes may be made without departing from the scope of the present invention. In particular, a feature (device-like or method-like) recited in a given embodiment, variant or shown in a drawing may be combined with or replace another feature in another embodiment, variant or drawing, without departing from the scope of the present invention. Various combinations of the features described **in** respect of any of the above embodiments or variants may accordingly be contemplated, that remain within the scope of the appended claims. **In** addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. **In** addition, many other variants than explicitly touched above can be contemplated. For example, the apparatus 10 may involve other materials and other components than those explicitly mentioned above. **In** addition, other air turborocket designs may be contemplated, which may depart from the design shown in FIGS. 4 and 5.

### REFERENCE LIST

- 1: Aircraft
- 10: Air turborocket apparatus
- 11: Air intake
- 12: Compressor
- 13: A turbine
- 14: Combustion chamber
- 15: Nozzle
- 16: Fuel tank
- 17: Driving system pump
- 17, 21 - 23: Driving system
- 18: Boiler
- 19: Coupling system
- 21: First heat exchanger
- 22: Second heat exchanger
- 23: Third heat exchanger
- A1: Atmospheric air received by the air intake
- A2: Atmospheric air led to the compressor
- A3: Compressed atmospheric air
- CM: Combusted mixture
- EF: Expanded fluid
- G0 - G1.3: Fluid circuit
- G0- G1.3: Fluid circuit section connecting tank with pump
- G0: First fluid subcircuit
- G1 (G1.1 - G1.3): Second fluid subcircuit
- G1.1: First portion of the second fluid subcircuit
- G1.1: Second portion of the second fluid subcircuit
- G1.1: End portion of the second fluid subcircuit
- G1.3: End portion of flow path to turbine

## Claims

1. An air turborocket apparatus (10), comprising:
an air intake (11) designed to receive atmospheric air;
a compressor (12) designed to compress atmospheric air received by the air intake (11),
a turbine (13),
a gas generator system including
a fluid circuit (G0 - G1.3) defining a flow path to the turbine (13) and
a driving system (17, 21 - 23) designed to convey a fluid along the fluid circuit (G0 - G1.3) for the fluid to expand through the turbine (13) and rotate it,
a coupling system coupling the turbine (13) with one or each of the compressor (12) and the driving system (17, 21 - 23), to transfer energy to one or each of the compressor (12) and the driving system (17, 21 - 23);
a combustion chamber (14) designed to receive and combust a mixture of the compressed atmospheric air and the expanded fluid;
a nozzle (15) arranged to expel the combusted mixture and thereby create thrust; the air turborocket apparatus being **characterised in that** it further comprises
a boiler (18) designed to generate heat, wherein the boiler (18) is in thermal communication with said flow path to transfer the generated heat to the fluid conveyed along said flow path.

2. The air turborocket apparatus (10) according to claim **1,** wherein
the coupling system couples the turbine (13) with the compressor (12), whereby the rotated turbine (13) at least contributes to rotate the compressor (12) to accordingly compress the atmospheric air received by the air intake (11), in operation.

3. The air turborocket apparatus (10) according to claim **1** or **2,** wherein
the driving system (17, 21 - 23) includes a pump designed to pump liquid fuel, the pump connected to the fluid circuit (G0 - G1.3) to inject the pumped liquid fuel into the fluid circuit (G0 - G1.3), whereby said fluid is obtained from the pumped liquid fuel, in operation.

4. The air turborocket apparatus (10) according to claim **3,** wherein
the coupling system couples the turbine (13) with the pump, whereby the rotated turbine (13) at least contributes to actuate the pump, in operation.

5. The air turborocket apparatus (10) according to claim **3** or **4,** wherein
the fluid circuit (G0 - G1.3) comprises two subcircuits, these including a first subcircuit and a second subcircuit,
the first subcircuit connects the pump to the boiler (18), which can accordingly combust a fluid formed from the pumped liquid fuel, and
the second subcircuit connects the pump to the turbine (13), thereby defining said flow path to the turbine (13).

6. The air turborocket apparatus (10) according to claim **5,** wherein
the apparatus (10) further includes a first heat exchanger (21), which thermally connects the boiler (18) and a portion of the flow path defined by the second subcircuit, to transfer the generated heat to the fluid conveyed along the second subcircuit.

7. The air turborocket apparatus (10) according to claim **6,** wherein
the apparatus (10) further includes a second heat exchanger (22) arranged along the second subcircuit, upstream of the first heat exchanger (21), to transfer heat from the combustion chamber (14) and/or the nozzle (15) to fluid conveyed along the second subcircuit.

8. The air turborocket apparatus (10) according to claim **7,** wherein
the driving system (17, 21 - 23) further includes a third heat exchanger (23) arranged along the second subcircuit, upstream of the second heat exchanger (22), to transfer heat from the atmospheric air received by the air intake (11) to fluid conveyed along the second subcircuit.

9. The air turborocket apparatus (10) according to any one of claims **1** to **8,** wherein
the boiler (18) is designed to combust fuel and produce a low-pressure combustion gas flow, and
the gas generator is designed to produce a high-pressure flow of the fluid in the fluid circuit (G0 - G1.3).

10. The air turborocket apparatus (10) according to claim **9,** wherein
the boiler (18) is designed to produce said low-pressure combustion gas flow inside a duct delimited by an inner wall of the boiler (18), and
the duct is preferably not in fluid communication with said fluid circuit (G0 - G1.3).

11. The air turborocket apparatus (10) according to claim **10,** wherein
a portion of the fluid circuit (G0 - G1.3) includes a conduit that is coiled around the duct, thereby forming a heat exchanger to transfer the generated heat to the fluid conveyed along said conduit.

12. The air turborocket apparatus (10) according to claim **11,** wherein
the conduit is coiled inside the boiler (18), against said inner wall of the boiler, or. the conduit is coiled around the boiler (18), against an outer wall of the boiler.

13. The air turborocket apparatus (10) according to any one of claims **1** to **12,** wherein
the apparatus (10) further includes an air inlet configured to transfer part of the atmospheric air compressed by the compressor (12) to the boiler (18), in operation.

14. An aircraft comprising
one or more air turborocket apparatuses (10), each according to claim **1,** and, preferably, one or more fuel tanks (16), to which the gas generator system and the boiler (18) are connected.

15. A method of operating an air turborocket apparatus (10), the method comprising:
providing an air turborocket apparatus (10) according to any one of claims **1** to **13;** and
operating the air turborocket apparatus (10) for:
the air intake (11) to receive atmospheric air;
the compressor (12) to compress atmospheric air received by the air intake (11);
the driving system (17, 21 - 23) to convey a fluid along the fluid circuit (G0 - G1.3) for the fluid to expand through the turbine (13) and rotate it, to transfer energy to one or each of the compressor (12) and the driving system (17, 21 - 23);
the boiler (18) to generate heat and transfer the generated heat to the fluid conveyed along said flow path;
the combustion chamber (14) to receive and combust a mixture of the compressed atmospheric air and the expanded fluid; and
the nozzle (15) to expel the combusted mixture and thereby create thrust.

## Patentansprüche

1. Eine Luftturbinenraketenvorrichtung (10), umfassend:
einen Lufteinlass (11), der dazu ausgelegt ist, atmosphärische Luft aufzunehmen;
einen Kompressor (12), der dazu ausgelegt ist, die vom Lufteinlass (11) aufgenommene atmosphärische Luft zu komprimieren,
eine Turbine (13),
ein Gasgeneratorsystem, umfassend
einen Fluidkreislauf (G0 - G1.3), der einen Strömungsweg zur Turbine (13) definiert, und
ein Antriebssystem (17, 21 - 23), das dazu ausgelegt ist, ein Fluid entlang des Fluidkreislaufs (G0 - G1.3) zu transportieren, damit sich das Fluid durch die Turbine (13) ausdehnt und diese dreht,
ein Kupplungssystem, das die Turbine (13) mit einem oder jedem der Komponenten Kompressor (12) und Antriebssystem (17, 21 - 23) koppelt, um Energie auf den Kompressor (12) und/oder das Antriebssystem (17, 21 - 23) zu übertragen;
eine Brennkammer (14), die dazu ausgelegt ist, ein Gemisch aus der komprimierten atmosphärischen Luft und dem expandierten Fluid aufzunehmen und zu verbrennen;
eine Düse (15), die dazu ausgelegt ist, das verbrannte Gemisch auszustossen und dadurch Schub zu erzeugen; wobei die Luftturbinenraketenvorrichtung **dadurch gekennzeichnet ist, dass** sie weiter
einen Kessel (18) umfasst, der dazu ausgelegt ist, Wärme zu erzeugen, wobei der Kessel (18) in thermischer Verbindung mit dem Strömungsweg steht, um die erzeugte Wärme auf das entlang des Strömungswegs geförderte Fluid zu übertragen.

2. Die Luftturbinenraketenvorrichtung (10) nach Anspruch **1,** wobei
das Kupplungssystem die Turbine (13) mit dem Kompressor (12) koppelt, wodurch die rotierende Turbine (13) zumindest dazu beiträgt, den Kompressor (12) zu drehen, um entsprechend die von der Lufteinlassöffnung (11) aufgenommene atmosphärische Luft während des Betriebs zu komprimieren.

3. Die Luftturbinenraketenvorrichtung (10) nach Anspruch **1** oder **2,** wobei
das Antriebssystem (17, 21 - 23) eine Pumpe umfasst, die zum Pumpen von flüssigem Kraftstoff ausgelegt ist, wobei die Pumpe mit dem Fluidkreislauf (G0 - G1.3) verbunden ist, um den gepumpten flüssigen Kraftstoff im Betrieb in den Fluidkreislauf (G0 - G1.3) einzuspritzen, wodurch das Fluid aus dem gepumpten flüssigen Kraftstoff gewonnen wird.

4. Die Luftturbinenraketenvorrichtung (10) nach Anspruch **3,** wobei
das Kupplungssystem die Turbine (13) mit der Pumpe koppelt, wodurch die rotierende Turbine (13) im Betrieb zumindest dazu beiträgt, die Pumpe zu betätigen.

5. Die Luftturbinenraketenvorrichtung (10) nach Anspruch **3** oder **4,** wobei
der Fluidkreislauf (G0 - G1.3) zwei Teilkreisläufe umfasst, darunter einen ersten Teilkreislauf und einen zweiten Teilkreislauf,
wobei der erste Teilkreislauf die Pumpe mit dem Kessel (18) verbindet, der dementsprechend ein aus dem gepumpten flüssigen Brennstoff gebildetes Fluid verbrennen kann, und
der zweite Teilkreislauf die Pumpe mit der Turbine (13) verbindet, wodurch der Strömungsweg zur Turbine (13) definiert wird.

6. Die Luftturbinenraketenvorrichtung (10) nach Anspruch **5,** wobei
die Vorrichtung (10) weiter einen ersten Wärmetauscher (21) umfasst, der den Kessel (18) und einen Teil des durch den zweiten Teilkreislauf definierten Strömungswegs thermisch verbindet, um die erzeugte Wärme auf das entlang des zweiten Teilkreislaufs geförderte Fluid zu übertragen.

7. Die Luftturbinenraketenvorrichtung (10) nach Anspruch **6,** wobei
die Vorrichtung (10) weiter einen zweiten Wärmetauscher (22) umfasst, der entlang des zweiten Teilkreislaufs stromaufwärts des ersten Wärmetauschers (21) angeordnet ist, um Wärme von der Brennkammer (14) und/oder der Düse (15) auf das entlang des zweiten Teilkreislaufs geförderte Fluid zu übertragen.

8. Die Luftturbinenraketenvorrichtung (10) nach Anspruch **7,** wobei
das Antriebssystem (17, 21 - 23) weiter einen dritten Wärmetauscher (23) umfasst, der entlang des zweiten Teilkreislaufs stromaufwärts des zweiten Wärmetauschers (22) angeordnet ist, um Wärme von der durch den Lufteinlass (11) aufgenommenen Umgebungsluft auf das entlang des zweiten Teilkreislaufs geförderte Fluid zu übertragen.

9. Die Luftturbinenraketenvorrichtung (10) nach einem der Ansprüche **1** bis **8,** wobei
der Kessel (18) so ausgelegt ist, dass er Brennstoff verbrennt und einen Niederdruck-Verbrennungsgasstrom erzeugt, und
der Gasgenerator so ausgelegt ist, dass er einen Hochdruckstrom des Fluids im Fluidkreislauf (G0 - G1.3) erzeugt.

10. Die Luftturbinenraketenvorrichtung (10) nach Anspruch **9,** wobei
der Kessel (18) dazu ausgelegt ist, den Niederdruck-Verbrennungsgasstrom innerhalb eines durch eine Innenwand des Kessels (18) begrenzten Kanals zu erzeugen, und
der Kanal vorzugsweise nicht in Fluidverbindung mit dem Fluidkreislauf (G0 - G1.3) steht.

11. Die Luftturbinenraketenvorrichtung (10) nach Anspruch **10,** wobei
ein Teil des Fluidkreislaufs (G0 - G1.3) eine Leitung umfasst, die um den Kanal gewickelt ist und dadurch einen Wärmetauscher bildet, um die erzeugte Wärme auf das entlang der Leitung geförderte Fluid zu übertragen.

12. Die Luftturbinenraketenvorrichtung (10) nach Anspruch **11,** wobei
die Leitung innerhalb des Kessels (18) an der Innenwand des Kessels gewickelt ist, oder
die Leitung um den Kessel (18) an einer Aussenwand des Kessels gewickelt ist.

13. Die Luftturbinenraketenvorrichtung (10) nach einem der Ansprüche **1** bis **12,** wobei
die Vorrichtung (10) weiter einen Lufteinlass umfasst, der so konfiguriert ist, dass er während des Betriebs einen Teil der durch den Kompressor (12) komprimierten Umgebungsluft zum Kessel (18) überträgt.

14. Ein Flugzeug, umfassend
eine oder mehrere Luftturbinenvorrichtungen (10), jeweils nach Anspruch **1,** und
vorzugsweise einen oder mehrere Kraftstofftanks (16), mit denen das Gasgeneratorsystem und der Kessel (18) verbunden sind.

15. Ein Verfahren zum Betreiben einer Luftturbinenvorrichtung (10), wobei das Verfahren umfasst:
Bereitstellen einer Luftturbinenvorrichtung (10) nach einem der Ansprüche **1** bis **13;** und Betreiben der Luftturbinenvorrichtung (10), damit
der Lufteinlass (11) atmosphärische Luft aufnimmt;
der Kompressor (12) die vom Lufteinlass (11) aufgenommene atmosphärische Luft komprimiert;
das Antriebssystem (17, 21 - 23) ein Fluid entlang des Fluidkreislaufs (G0 - G1.3) fördert, damit sich das Fluid durch die Turbine (13) ausdehnt und diese dreht, um Energie auf einen oder jeden der Kompressor (12) und das Antriebssystem (17, 21 - 23) zu übertragen;
der Kessel (18) Wärme erzeugt und die erzeugte Wärme auf das entlang des Strömungswegs geförderte Fluid überträgt;
die Brennkammer (14) ein Gemisch aus der komprimierten atmosphärischen Luft und dem expandierten Fluid aufnimmt und verbrennt; und
die Düse (15) das verbrannte Gemisch ausstösst und damit Schub erzeugt.

## Revendications

1. Appareil de turbofusée à air (10), comprenant :
une admission d'air (11) conçue pour recevoir de l'air atmosphérique ;
un compresseur (12) conçu pour comprimer de l'air atmosphérique reçu par l'admission d'air (11),
une turbine (13),
un système générateur de gaz comprenant
un circuit de fluide (G0 - G1.3) définissant un trajet d'écoulement vers la turbine (13) et
un système d'entraînement (17, 21 - 23) conçu pour acheminer un fluide le long du circuit de fluide (G0 - G1.3) afin que le fluide se détende à travers la turbine (13) et la fasse tourner,
un système d'accouplement accouplant la turbine (13) à l'un ou à chacun du compresseur (12) et du système d'entraînement (17, 21 - 23), afin de transférer de l'énergie à l'un ou à chacun du compresseur (12) et du système d'entraînement (17, 21 - 23) ;
une chambre de combustion (14) conçue pour recevoir et brûler un mélange de l'air atmosphérique comprimé et du fluide détendu ;
une tuyère (15) agencée pour expulser le mélange brûlé et créer ainsi une poussée ; l'appareil de turbofusée à air étant **caractérisé en ce qu'**il comprend en outre
une chaudière (18) conçue pour générer de la chaleur, dans laquelle la chaudière (18) est en communication thermique avec ledit chemin d'écoulement afin de transférer la chaleur générée au fluide acheminé le long dudit chemin d'écoulement.

2. Appareil de turbofusée à air (10) selon la revendication **1,** dans lequel
le système d'accouplement accouple la turbine (13) au compresseur (12), de sorte que la turbine (13) en rotation contribue au moins à faire tourner le compresseur (12) pour comprimer en conséquence l'air atmosphérique reçu par l'admission d'air (11), en fonctionnement.

3. Appareil de turbofusée à air (10) selon la revendication **1** ou **2,** dans lequel
le système d'entraînement (17, 21 - 23) comprend une pompe conçue pour pomper du carburant liquide, la pompe étant reliée au circuit de fluide (G0 - G1.3) pour injecter le carburant liquide pompé dans le circuit de fluide (G0 - G1.3), ledit fluide étant obtenu à partir du carburant liquide pompé, en fonctionnement.

4. Appareil de turbofusée à air (10) selon la revendication **3,** dans lequel
le système d'accouplement accouple la turbine (13) à la pompe, de sorte que la turbine en rotation (13) contribue au moins à actionner la pompe, en fonctionnement.

5. Appareil de turbofusée à air (10) selon la revendication **3** ou **4,** dans lequel
le circuit de fluide (G0 - G1.3) comprend deux sous-circuits, à savoir un premier sous-circuit et un deuxième sous-circuit,
le premier sous-circuit relie la pompe à la chaudière (18), qui peut ainsi brûler un fluide formé à partir du combustible liquide pompé, et
le deuxième sous-circuit relie la pompe à la turbine (13), définissant ainsi ledit chemin d'écoulement vers la turbine (13).

6. Appareil de turbofusée à air (10) selon la revendication **5,** dans lequel
l'appareil (10) comprend en outre un premier échangeur de chaleur (21), qui relie thermiquement la chaudière (18) et une partie du trajet d'écoulement défini par le deuxième sous-circuit, afin de transférer la chaleur générée au fluide acheminé le long du deuxième sous-circuit.

7. Appareil de turbofusée à air (10) selon la revendication **6,** dans lequel
l'appareil (10) comprend en outre un deuxième échangeur de chaleur (22) disposé le long du deuxième sous-circuit, en amont du premier échangeur de chaleur (21), pour transférer de la chaleur de la chambre de combustion (14) et/ou de la tuyère (15) au fluide acheminé le long du deuxième sous-circuit.

8. Appareil de turbofusée à air (10) selon la revendication **7,** dans lequel
le système d'entraînement (17, 21-23) comprend en outre un troisième échangeur de chaleur (23) disposé le long du deuxième sous-circuit, en amont du deuxième échangeur de chaleur (22), pour transférer de la chaleur de l'air atmosphérique reçu par l'admission d'air (11) vers le fluide acheminé le long du deuxième sous-circuit.

9. Appareil de turbofusée à air (10) selon l'une quelconque des revendications **1** à **8,** dans lequel
la chaudière (18) est conçue pour brûler du combustible et produire un flux de gaz de combustion à basse pression, et
le générateur de gaz est conçu pour produire un flux à haute pression du fluide dans le circuit de fluide (G0 - G1.3).

10. Appareil de turbofusée à air (10) selon la revendication **9,** dans lequel
la chaudière (18) est conçue pour produire ledit flux de gaz de combustion à basse pression à l'intérieur d'un canal délimité par une paroi interne de la chaudière (18), et
le canal n'est de préférence pas en communication fluidique avec ledit circuit de fluide (G0 - G1.3).

11. Appareil de turbofusée à air (10) selon la revendication **10,** dans lequel
une partie du circuit de fluide (G0 - G1.3) comprend un conduit qui est enroulé autour du canal, formant ainsi un échangeur de chaleur pour transférer la chaleur générée au fluide acheminé le long dudit conduit.

12. Appareil de turbofusée à air (10) selon la revendication **11,** dans lequel
le conduit est enroulé à l'intérieur de la chaudière (18), contre ladite paroi interne de la chaudière, ou
le conduit est enroulé autour de la chaudière (18), contre une paroi extérieure de la chaudière.

13. Appareil de turbofusée à air (10) selon l'une quelconque des revendications **1** à **12,** dans lequel
l'appareil (10) comprend en outre une entrée d'air configurée pour transférer une partie de l'air atmosphérique comprimé par le compresseur (12) vers la chaudière (18), en fonctionnement.

14. Aéronef comprenant
un ou plusieurs appareils de turbofusée à air (10), chacun selon la revendication 1, et,
de préférence, un ou plusieurs réservoirs de carburant (16), auxquels sont raccordés le système générateur de gaz et la chaudière (18).

15. Procédé de fonctionnement d'un appareil de turbofusée à air (10), le procédé comprenant :
la fourniture d'un appareil de turbofusée à air (10) selon l'une quelconque des revendications **1** à **13** ; et
faire fonctionner le dispositif de turbofusée à air (10) pour que :
l'admission d'air (11) reçoive de l'air atmosphérique ;
le compresseur (12) comprime de l'air atmosphérique reçu par l'admission d'air (11) ;
le système d'entraînement (17, 21-23) achemine un fluide le long du circuit de fluide (G0-G1.3) afin que le fluide se détende à travers la turbine (13) et la fasse tourner, pour transférer de l'énergie à l'un ou à chacun du compresseur (12) et du système d'entraînement (17, 21-23) ;
la chaudière (18) génère de la chaleur et transfère la chaleur générée au fluide acheminé le long dudit chemin d'écoulement ;
la chambre de combustion (14) reçoive et brûle un mélange de l'air atmosphérique comprimé et du fluide détendu ; et
la buse (15) expulse le mélange brûlé et créer ainsi une poussée.
